# EUROPEAN PATENT SPECIFICATION

(11) **EP 2 512 013 B1**
(45) Date of publication and mention of the grant of the patent: **04.12.2013**
(21) Application number: 12163379.6
(22) Date of filing: 05.04.2012
(51) Int. Cl.: H02K 15/095

(54) **Wire guide for winding a wire on a stator or rotor core, particularly for wires having a relatively large diameter**
Drahtführung zum Aufwickeln von Draht auf einem Stator- oder Ständerkern, insbesondere für Drähte mit einem relativ großen Durchmesser
Guide de fil pour enrouler un fil sur un noyau de stator ou de rotor, en particulier des fils métalliques ayant un diamètre relativement grand

(30) Priority: 14.04.2011 IT MI20110636
(43) Date of publication of application: 17.10.2012
(73) Proprietor: MARSILLI & CO. S.P.A., 26012 Castelleone (CR) (IT)
(72) Inventor: Parati, Gian Battista, 26012 Castelleone CR (IT)
(74) Representative: Modiano, Micaela Nadia

(56) References cited:
- EP-A2- 1 435 685
- GB-A- 2 289 428
- JP-A- 2006 238 624

## Description

The present invention relates to a wire guide for winding a wire on a stator or rotor core, particularly for wires having a relatively large diameter, i.e., with a diameter of 1.2 mm or more.

There are several kinds of device for providing the windings of cores of stators or rotors of electric motors by means of a copper wire. Such devices generally use a wire guide which has the function of directing the wire toward the core during the execution of its winding around the core.

In some devices, derived from devices for winding spools and usable for winding some types of coil, the wire guide is static, while the core on which the winding must be provided is turned about its own axis, which is usually oriented at right angles to the direction along which the wire is dispensed by the wire guide.

This type of apparatus can be used only for cores having a simple shape, with poles having a limited extension and with winding wires that have a small diameter.

In other devices, it is the core that is static, while the wire guide is moved around the core so as to deposit progressively the wire around the core.

These types of devices are used generally to wind stator or rotor cores having a more complex shape, in which it is more difficult to reach the bottom of the cavity around the core in which the wire is to be deposited.

The last type of device, though being more versatile than the previously described type, has problems and limitations in meeting the winding requirements of rotor or stator cores with a wire having a large diameter, i.e., 1.2 mm or more, and with a reduced number of turns.

These types of cores in fact usually have, in plan view, i.e., in a sectional view taken at right angles to the axis of the core around which it is necessary to provide the winding, a rectangular shape with two long sides and two short sides. Such cores are designed to be arranged around an axis, which constitutes the axis of the rotor or of the stator, with the long sides oriented parallel to the axis around which they are arranged. In winding these cores, the portions of wire along the long sides of the core must be as mutually parallel as possible and must cross by mutually overlapping exclusively on the short sides.

The use of known types of devices to perform these types of winding suffers the drawback of generating deformations of the core which make it difficult to arrange it correctly around the axis of the rotor or of the stator.

Moreover, in devices of the known type, the wire, at the exit from the wire guide, arranges itself along a catenary, making it problematic to provide a precise deposition inside the cavity that surrounds the core.

A further problem is the fact that during the provision of the winding the wire is subjected to intense tensions, which can cause wear of the coating of the wire, a loss of quality and the risk of breaking the wire.

JP 2006 238624 discloses a winding device including a conductor guide cylinder, arranged concentrically at the center of a stator core, and a rocket at a fixed angle to make reciprocating motion in the axial direction, a nozzle head attached to the tip of the conductor guide cylinder, and nozzles that are mounted so as to be capable of proceeding to or receding from outside in the radial direction to the conductor guide cylinder and send out a conductor in the direction approximately orthogonal to the conductor guide cylinder via the nozzle head.

GB 2 289 428 discloses an apparatus for winding layers of wire on a pole of a rotor or stator of a rotary electrical generator or motor, comprising a needle mounting member movable substantially axially of the rotor or stator, and a needle rotatably mounted on the mounting member and extending transversely thereto, the needle being rotatable about an axis transverse to the direction of movement of the mounting member.

EP 1 435 685 discloses an apparatus for making wire winding comprising a wire nozzle configured to dispense the wire using relative movement between the component and the wire nozzle, wherein an angular orientation of the wire nozzle about an axis of the nozzle in a first plane is programmably controlled.

The aim of the present invention is to solve the above mentioned problems, by providing a wire guide for winding a wire on a stator or rotor core, particularly for wires having a relatively large diameter, which makes it possible to obtain a deposition of the wire around the core with high precision.

Within this aim, an object of the invention is to provide a wire guide which causes no deformations of the core following the execution of the winding.

Another object of the invention is to provide a wire guide which avoids stressing the wire excessively during the provision of the winding, so as to preserve the integrity and quality of the wire used.

Another object of the invention is to provide a wire guide which, thanks to its particular constructive characteristics, is capable of giving the greatest assurances of reliability and safety in use.

Another object of the present invention is to provide a wire guide which can be obtained easily starting from commonly commercially available elements and materials and which is also competitive from a merely economic standpoint.

This aim and these and other objects which will become better apparent hereinafter are achieved by a wire guide for winding a wire on a stator or rotor core, particularly for wires having a relatively large diameter, comprising a wire guide body which supports a shaft in which a passage for the wire to be wound is provided, said shaft being able to rotate about its own axis with respect to said wire guide body and said passage having in sequence, starting from an inlet for the wire, a first portion which is extended substantially parallel to said axis and a second portion which is extended substantially at right angles to said first portion and ends or coincides with an outlet for the wire, said first portion and said second portion being connected by means of a curved intermediate portion, proximate to said outlet means being provided for curving the wire oppositely which are adapted to at least reduce the curvature effect on the wire produced by said intermediate portion of the passage.

Further characteristics and advantages of the invention will become better apparent from the detailed description of a preferred but not exclusive embodiment of the wire guide according to the invention, illustrated by way of non-limiting example in the accompanying drawings, wherein:

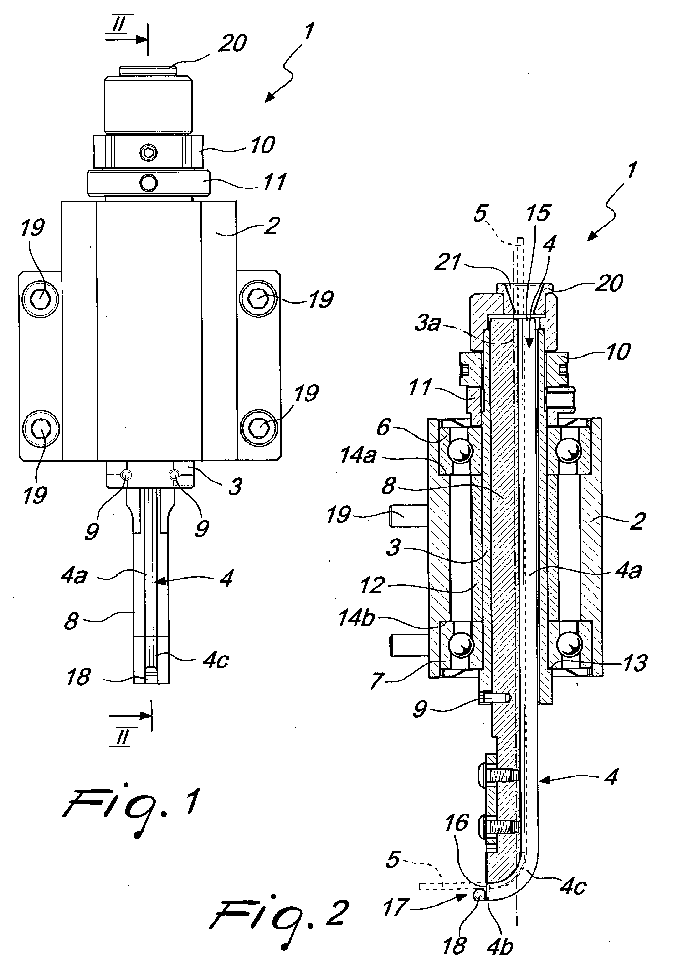

Figure 1 is a rear elevation view of the wire guide according to the invention;
Figure 2 is a sectional view of Figure 1, taken along the line II-II;
Figures 3 to 10 are perspective views of a winding sequence of two rotor or stator cores by means of the wire guide according to the invention.

With reference to the figures, the wire guide according to the invention, generally designated by the reference numeral 1, comprises a wire guide body 2, which supports a shaft 3 in which a passage 4 is defined for the wire 5 to be wound.

The shaft 3 is supported by the wire guide body 2 so that it can rotate about its own axis 3a by means of a pair of bearings 6, 7, which are mutually spaced along the axis 3a.

More precisely, the shaft 3 is hollow and the passage 4 for the wire 5 is defined inside a tube 8 which is locked with respect to the shaft 3, for example by means of one or more threaded grub screws or pins 9. The tube 8 exits, at least with its axial end in which the outlet 16 of the passage 4 is defined, from an axial end of the shaft 3. In the illustrated embodiment, the tube 8 exits with both axial ends from the axial ends of the shaft 3.

The shaft 3 is locked axially with respect to the wire guide body 2 by means of a ring 10, which abuts against a spacer 11, which rests against the internal ring of the bearing 6. Another spacer 12 is interposed between the internal rings of the bearings 6 and 7 and the internal ring of the bearing 7 rests against a shoulder 13 defined on the shaft 3. The outer rings of the bearings 6 and 7 rest against opposite axial shoulders 14a, 14b, which are defined in the wire guide body 2.

The passage 4 has in sequence, starting from its inlet 15 for the wire 5, a first portion 4a, which is substantially parallel to the axis 3a, and a second portion 4b, which is extended substantially at right angles to the first portion 4a and ends with the outlet 16 for the wire 5.

An intermediate portion 4c is arranged between the first portion 4a and the second portion 4b and is curved with a radius of curvature which is variable as a function of the diameter of the wire 5 to be wound but in any case large enough to avoid generating excessive stresses and/or deformations of the wire 5.

It should be noted that, as shown, the second portion 4b can have such a short extension as to coincide with the outlet 16 or be limited to the outlet 16 alone for the wire 5, as shown.

Proximate to the outlet 16 means 17 are provided for curving the wire 5 oppositely, which are adapted to at least reduce the curvature effect of the wire 5 produced by the intermediate portion 4c of the passage 4.

Preferably, the opposite curving means 17 comprise a raised portion 18, which is fixed to the tube 8 at the outlet 16 and is intended to make contact with the side of the wire 5 that is directed oppositely with respect to the center of curvature of the intermediate portion 4c.

Conveniently, the region of the raised portion 18 that is intended to make contact with the wire 5 is rounded so as to not produce abrasions or otherwise damage of the coating of the wire 5.

The wire guide body 2 is provided with means for connection to a movement head, of a type which is known and not shown for the sake of simplicity, which is capable of moving the wire guide 1 along at least three mutually perpendicular axes and can be controlled by a control and actuation element of the electronic type according to preset programs to wind the wire 5 around one or more stator or rotor cores 30.

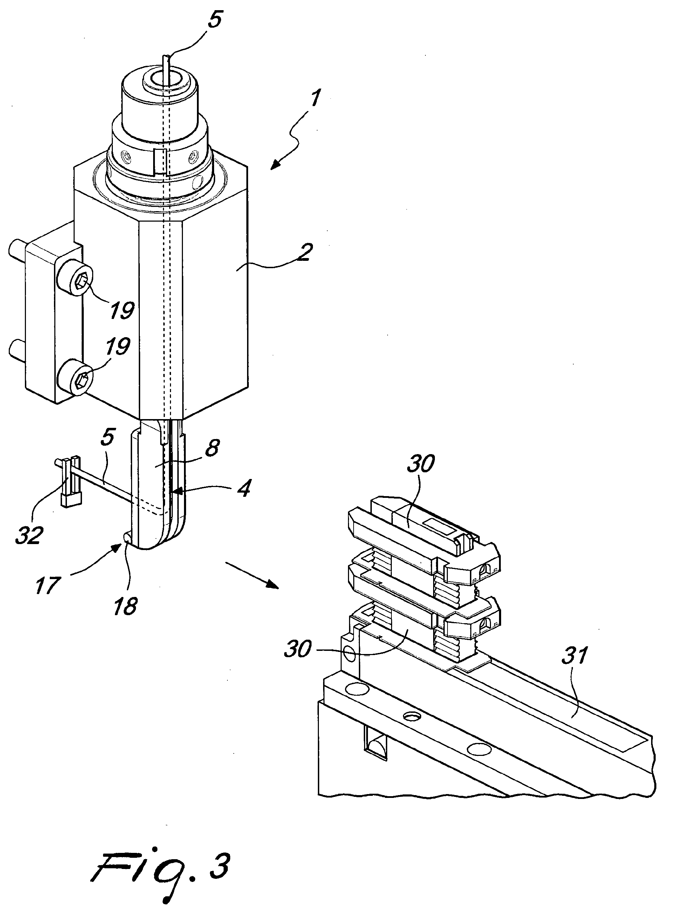

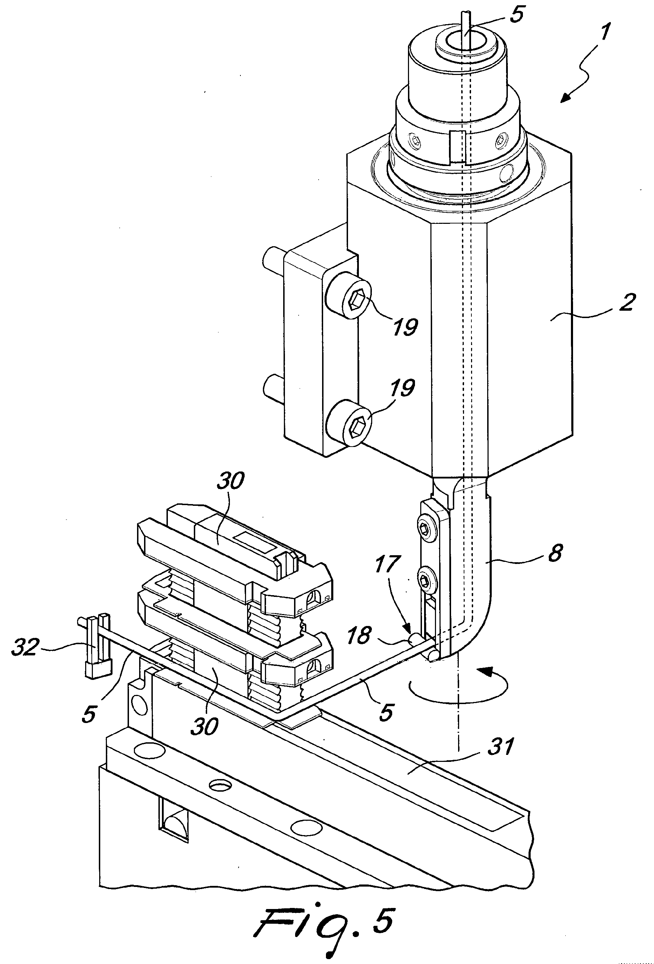

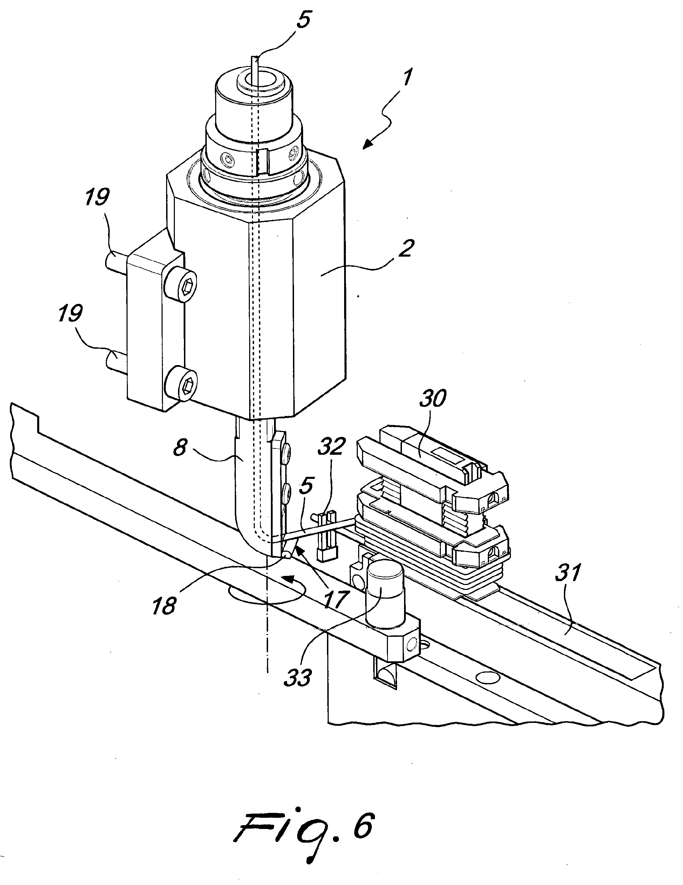

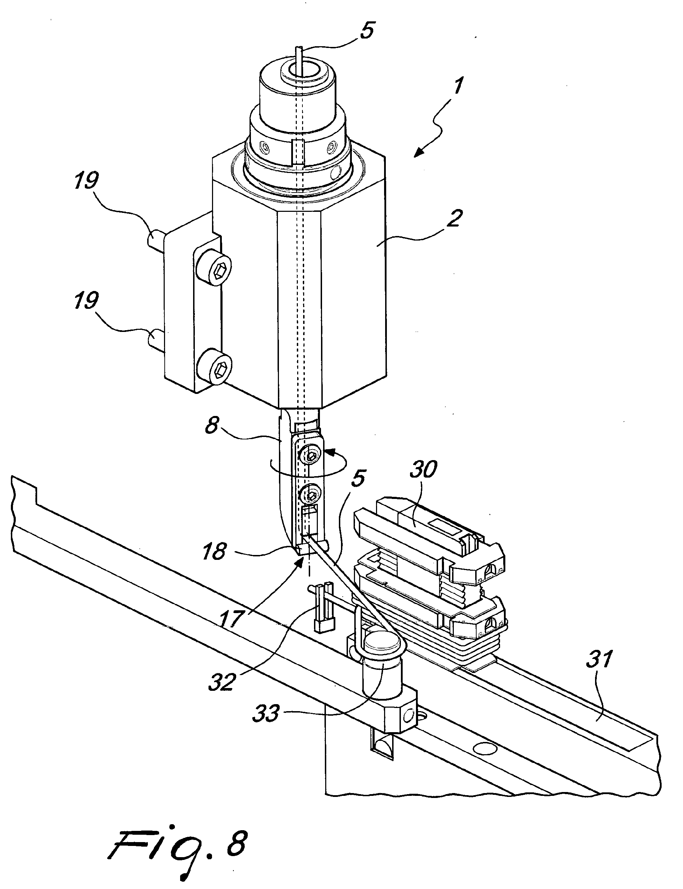

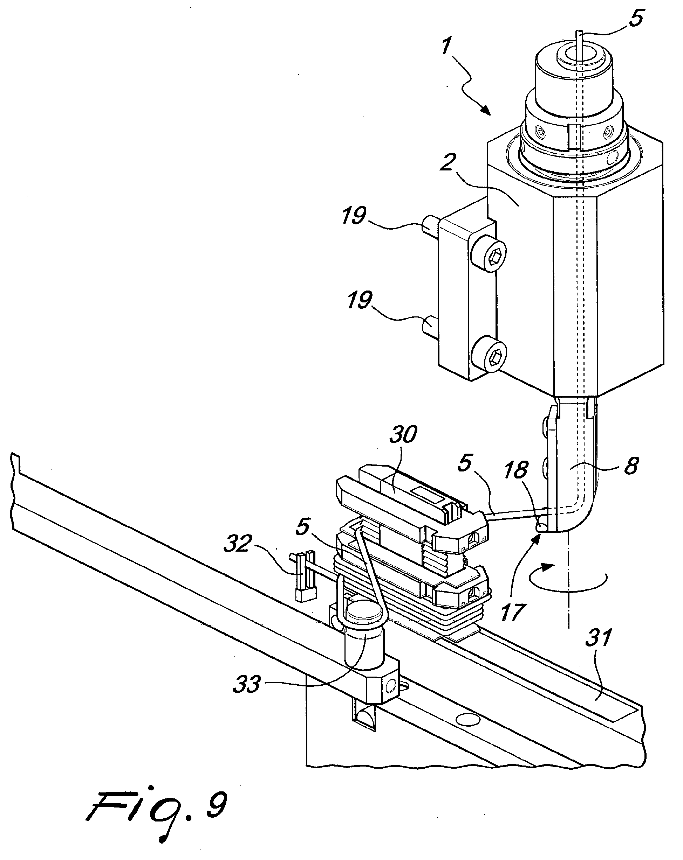

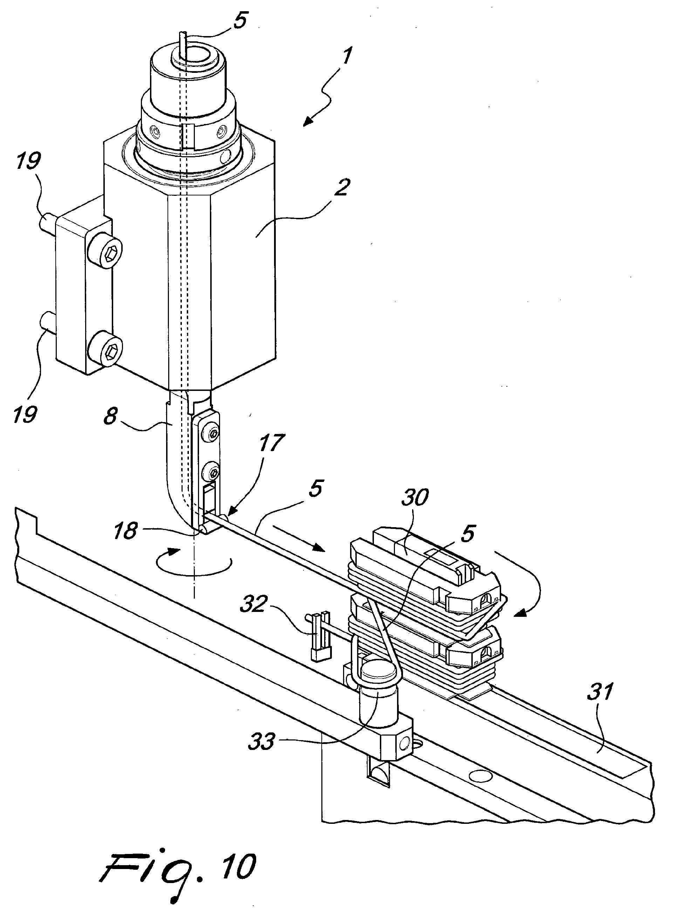

The connection means can be constituted simply by screws 19 and the wire guide body 2 is designed to be supported by the movement head with the axis 3a arranged substantially vertically, and the axis of the core 30 on which the wire 5 is to be wound is also arranged vertically, as shown in Figures 3 to 10.

For the sake of completeness in description, it should be noted that a cylindrical block 20 is connected at the inlet 15 of the passage 4 to the wire guide body 2 and is crossed axially by a conical flared hole 21 to direct the wire 5 toward the inlet 15.

Use of the wire guide 1 according to the invention is as follows.

The core or cores 30 are supported and locked so that their axis is preferably oriented vertically by means of an adapted support 31. In the illustrated example, the two cores 30 have, in plan view, a rectangular shape.

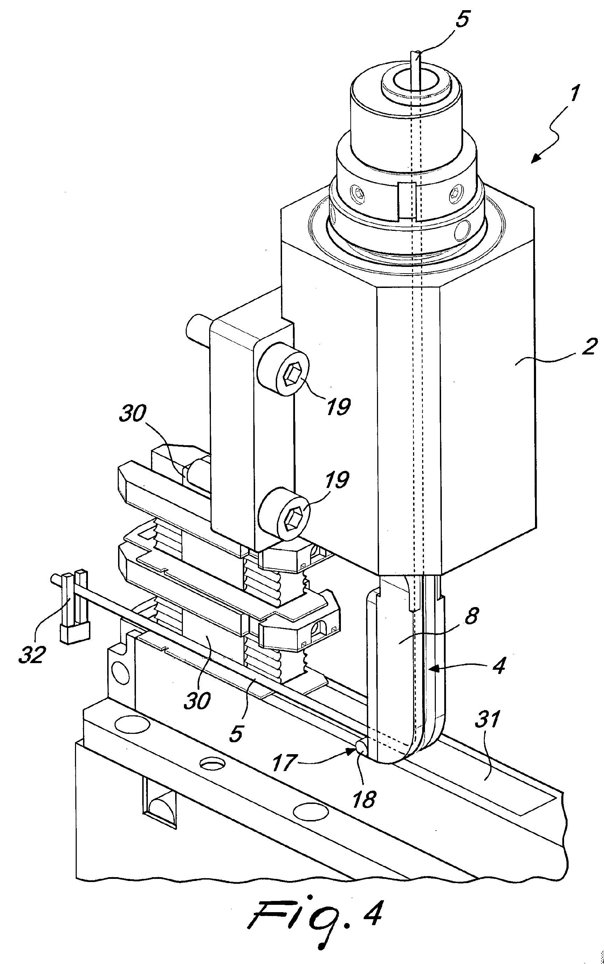

The end of the wire 5 dispensed by the wire guide 1 is engaged by a gripper 32 of a known type. Then, as a consequence of the movement of the movement head to which it is fixed, the wire guide 1 winds the wire 5 around the core 30, rotating about the axis of the core 30, as shown in Figures 4, 5 and 6. The winding is provided by arranging the several portions of wire 5 parallel to each other along the long sides of the core 30 and by overlapping the wire portions along the short sides of the core 30.

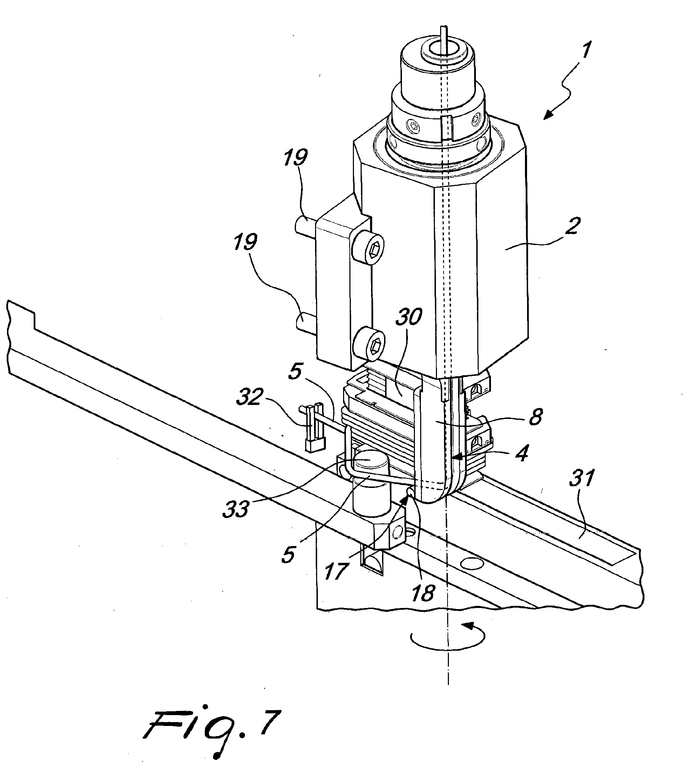

If, as in the illustrated case, it is necessary to wind a plurality of mutually coaxial cores 30, at the end of the winding of the first core 30, with the aid of a pin 33, around which a portion of the wire 5 is wound, another core 30 is wound with an opposite winding direction with respect to the direction used for the winding of the previously wound core, as shown in Figures 7, 8, 9, 10. At the end of the winding, the wire 5 is cut, in a per se known manner.

It should be noted that with the wire guide according to the invention the wire 5 is dispensed along a direction which is substantially perpendicular to the axis 3a. Moreover, due to the fact that the shaft 3, the tube 8 and therefore the passage 4 through which the wire 5 passes can rotate freely about the axis 3a with respect to the wire guide body 2, the wire 5 is always oriented correctly with respect to the core 30 around which it is wound. Due to this fact, high precision in the deposition of the wire 5 inside the cavity that surrounds the core 30 is achieved.

The presence of the opposite curving means 17 ensures a reduction, or preferably the complete elimination, of the curvature of the wire 5 produced by the passage of the wire 5 along the intermediate portion 4c of the passage 4, orienting correctly the wire at the exit from the passage 4 and also eliminating residual tensions on the wire 5. In this manner one effectively avoids causing a deformation of the core 30 during its winding even if the wire 5 has a relatively large diameter, particularly greater than 1.2 mm.

In practice it has been found that the wire guide according to the invention fully achieves the intended aim, since it makes it possible to perform, with high precision, the winding of stator or rotor cores, avoiding the production of deformations of the cores, even if a wire with a relatively large diameter is used.

The wire guide thus conceived is susceptible of numerous modifications and variations, which may be made without departing from the scope of the invention, which is defined in the appended claims. All the details may further be replaced with other technically equivalent elements.

In practice, the materials used, as well as the dimensions, may be any according to requirements and to the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A wire guide (1) for winding a wire on a stator or rotor core, particularly for wires having a relatively large diameter, comprising a wire guide body (2) that supports a shaft (3) in which there is a passage (4) for the wire (5) to be wound, said shaft (3) being able to rotate about its own axis (3a) with respect to said wire guide body (2) and said passage (4) having in sequence, starting from an inlet (15) for the wire (5), a first portion (4a) that is extended substantially parallel to said axis (3a) and a second portion (4b) that is extended substantially at right angles to said first portion (4a) and ends or coincides with an outlet (16) for the wire (5), said first portion (4a) and said second portion (4b) being connected by means of a curved intermediate portion (4c), **characterized in that** proximate to said outlet (16) means (17) being provided for curving the wire (5) oppositely which are adapted to at least reduce the curvature effect on the wire (5) produced by said intermediate portion (4c) of the passage (4).

2. The wire guide (1) according to claim 1, **characterized in that** said shaft (3) is hollow and **in that** said passage (4) is defined in a tube (8) that passes axially through said shaft (3) and is locked in said shaft (3), said tube (8) protruding from said shaft (3) at least with its axial end, in which said outlet (16) is provided.

3. The wire guide (1) according to claims 1 and 2, **characterized in that** said opposite curving means (17) comprise a raised portion (18), which is associated with said tube (8) at said outlet (16) and is designed to make contact with the side of the wire (5) that is directed oppositely with respect to the center of curvature of said intermediate portion (4c).

4. The wire guide (1) according to one or more of the preceding claims, **characterized in that** the region of said raised portion (18) that is designed to make contact with the wire (5) is rounded.

5. The wire guide (1) according to one or more of the preceding claims, **characterized in that** said wire guide body (2) is provided with means (19) for connection to a movement head, said wire guide body (2) being associable with said movement head with the axis (3a) of said shaft (3) arranged substantially vertically.

6. The wire guide (1) according to one or more of the preceding claims, **characterized in that** said shaft (3) is supported by said wire guide body (2) by means of a pair of bearings (6, 7), which are mutually spaced along said axis (3a).

## Patentansprüche

1. Drahtführung (1) zum Aufwickeln von Draht auf einen Stator- oder Rotorkern, insbesondere für Drähte mit einem relativ großen Durchmesser, umfassend einen Drahtführungskörper (2), der eine Welle (3) trägt, in der ein Durchtritt (4) für den aufzuwickelnden Draht (5) vorgesehen ist, wobei die Welle (3) dazu ausgebildet ist, dass sie sich um ihre eigene Achse (3a) in Bezug auf den Drahtführungskörper (2) dreht, und der Durchtritt (4) nacheinander, ausgehend von einem Einlass (15) für den Draht (5), einen ersten Abschnitt (4a) aufweist, der sich im Wesentlichen parallel zur Achse (3a) erstreckt, und einen zweiten Abschnitt (4b) aufweist, der sich im Wesentlichen rechtwinklig zu dem ersten Abschnitt (4a) erstreckt und mit einem Auslass (16) für den Draht (5) endet oder damit zusammenfällt, wobei der erste Abschnitt (4a) und der zweite Abschnitt (4b) mittels eines gebogenen Zwischenabschnitts (4c) verbunden sind, **dadurch gekennzeichnet, dass** nahe dem Auslass (16) Mittel (17) vorgesehen sind, um den Draht (5) entgegengesetzt zu biegen, die dazu ausgebildet sind, dass der vom Zwischenabschnitt (4c) des Durchtritts (4) erzeugte Biegungseffekt des Drahts (5) zumindest reduziert wird.

2. Drahtführung (1) nach Anspruch 1, **dadurch gekennzeichnet, dass** die Welle (3) hohl ausgebildet ist und dass der Durchtritt (4) in einem Rohr (8) definiert ist, das axial durch die Welle (3) verläuft und in der Welle (3) festgelegt ist, wobei das Rohr (8) mindestens mit seinem axialen Ende von der Welle (3) abragt, in dem der Auslass (16) vorgesehen ist.

3. Drahtführung (1) nach Anspruch 1 oder 2, **dadurch gekennzeichnet, dass** das Mittel (17) zum entgegengesetzten Biegen einen erhabenen Abschnitt (18) aufweist, der dem Rohr (8) am Auslass (16) zugeordnet ist und so ausgebildet ist, dass er mit der Seite des Drahts (5) in Kontakt kommt, der entgegengesetzt zur Mitte der Biegung des Zwischenabschnitts (4c) gerichtet ist.

4. Drahtführung (1) nach einem oder mehreren der vorhergehenden Ansprüche, **dadurch gekennzeichnet, dass** der Bereich des erhabenen Abschnitts (18), der dazu ausgebildet ist, dass er mit dem Draht (5) in Kontakt kommt, abgerundet ist.

5. Drahtführung (1) nach einem oder mehreren der vorhergehenden Ansprüche, **dadurch gekennzeichnet, dass** der Drahtführungskörper (2) mit Mitteln (19) zum Verbinden mit einem Bewegungskopf versehen ist, wobei der Drahtführungskörper (2) dem Bewegungskopf zuordenbar ist, wobei die Achse (3a) der Welle (3) im Wesentlichen vertikal angeordnet ist.

6. Drahtführung (1) nach einem oder mehreren der vorhergehenden Ansprüche, **dadurch gekennzeichnet, dass** die Welle (3) mittels eines Lagerpaars (6, 7) vom Drahtführungskörper (2) getragen ist, die entlang der Achse (3a) voneinander beabstandet sind.

## Revendications

1. Guide-fil (1) pour enrouler un fil métallique sur un stator ou un noyau de rotor, en particulier pour des fils ayant un diamètre relativement grand, comprenant un corps de guide-fil (2) qui supporte un arbre (3) dans lequel se trouve un passage (4) pour le fil (5) à enrouler, ledit arbre (3) étant apte à tourner autour de son axe (3a) par rapport audit corps de guide-fil (2) et ledit passage (4) comportant, dans l'ordre à partir d'une entrée (15) pour le fil (5), une première partie (4a) qui s'étend substantiellement parallèlement audit axe (3a) et une deuxième partie (4b) qui s'étend substantiellement à angle droit par rapport à ladite première partie (4a) et qui se termine ou coïncide avec une sortie (16) pour le fil (5), ladite première partie (4a) et ladite deuxième partie (4b) étant reliées au moyen d'une partie intermédiaire courbée (4c), **caractérisé en ce que** à proximité de ladite sortie (16), un moyen (17) est prévu pour courber le fil (5) de manière opposée, qui est adapté pour au moins réduire l'effet de courbure produit sur le fil (5) par ladite partie intermédiaire (4c) du passage (4).

2. Guide-fil (1) selon la revendication 1, **caractérisé en ce que** ledit arbre (3) est creux et **en ce que** ledit passage (4) est défini dans un tube (8) qui passe axialement à travers ledit arbre (3) et est bloqué dans ledit arbre (3), ledit tube (8) faisant saillie hors dudit arbre (3) au moins avec son extrémité axiale, dans laquelle est formée ladite sortie (16).

3. Guide-fil (1) selon les revendications 1 et 2, **caractérisé en ce que** ledit moyen de courbure opposée (17) comprend une partie relevée (18), qui est associée audit tube (8) au niveau de ladite sortie (16) et est conçue pour être en contact avec le côté du fil (5) qui est dirigé à l'opposé par rapport au centre de courbure de ladite partie intermédiaire (4c).

4. Guide-fil (1) selon l'une ou plusieurs des revendications précédentes, **caractérisé en ce que** la région de ladite partie relevée (18) qui est conçue pour être en contact avec le fil (5) est arrondie.

5. Guide-fil (1) selon l'une ou plusieurs des revendications précédentes, **caractérisé en ce que** ledit corps de guide-fil (2) est pourvu d'un moyen (19) permettant la connexion à une tête de déplacement, ledit corps de guide-fil (2) pouvant être associé à ladite tête de déplacement avec l'axe (3a) dudit arbre (3) disposé substantiellement verticalement.

6. Guide-fil (1) selon l'une ou plusieurs des revendications précédentes, **caractérisé en ce que** ledit arbre (3) est supporté par ledit corps de guide-fil (2) au moyen d'une paire de roulements (6, 7), qui sont mutuellement espacés le long dudit axe (3a).
